(19) Europäisches Patentamt
European Patent Office
Office européen des brevets

(11) **EP 1 276 277 B1**

(12) **FASCICULE DE BREVET EUROPEEN**

(45) Date de publication et mention
de la délivrance du brevet:
**15.09.2004 Bulletin 2004/38**

(51) Int Cl.⁷: **H04L 12/24**, H04L 12/26

(21) Numéro de dépôt: **02291203.4**

(22) Date de dépôt: **15.05.2002**

(54) **Procédé et dispositif pour rendre compte de la distribution temporelle d'une succession d'événements**

Verfahren und Vorrichtung zur Berichterstattung über die temporäre Verteilung einer Folge von Ereignissen

Method and apparatus for reporting the temporary distribution of a sequence of events

(84) Etats contractants désignés:
**DE FR GB**

(30) Priorité: **16.05.2001 FR 0106453**

(43) Date de publication de la demande:
**15.01.2003 Bulletin 2003/03**

(73) Titulaire: **Nortel Networks Limited
St. Laurent, Quebec H4S 2A9 (CA)**

(72) Inventeurs:
• **Isnard, Olivier
78220 Viroflay (FR)**
• **Calmel, Jean-Marie
78000 Versailles (FR)**
• **Pison, Laurent
78760 Jouars Pontchartrain (FR)**

(74) Mandataire: **Loisel, Bertrand
Cabinet Plasseraud
65/67 rue de la Victoire
75440 Paris Cedex 09 (FR)**

(56) Documents cités:
EP-A- 0 386 607        EP-A- 0 944 289

• **DROBISZ J ET AL: "Adaptive sampling methods to determine network traffic statistics including the Hurst parameter" LOCAL COMPUTER NETWORKS, 1998. LCN '98. PROCEEDINGS., 23RD ANNUAL CONFERENCE ON LOWELL, MA, USA 11-14 OCT. 1998, LOS ALAMITOS, CA, USA,IEEE COMPUT. SOC, US, 11 octobre 1998 (1998-10-11), pages 238-247, XP010310379 ISBN: 0-8186-8810-6**

• **COZZANI I ET AL: "Traffic sampling methods for end-to-end QoS evaluation in large heterogeneous networks" COMPUTER NETWORKS AND ISDN SYSTEMS, NORTH HOLLAND PUBLISHING. AMSTERDAM, NL, vol. 30, no. 16-18, 30 septembre 1998 (1998-09-30), pages 1697-1706, XP004138702 ISSN: 0169-7552**

• **TARRAF A A ET AL: "Characterization of packetized voice traffic in ATM networks using neural networks" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 novembre 1993 (1993-11-29), pages 996-1000, XP010109869 ISBN: 0-7803-0917-0**

• **SERBEST Y ET AL: "Unified measurement functions for traffic aggregation and link capacity assessment" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21 mars 1999 (1999-03-21), pages 1522-1531, XP010323876 ISBN: 0-7803-5417-6**

EP 1 276 277 B1

**Description**

La présente invention concerne les techniques de détection et d'échantillonnage d'événements se produisant de façon répétitive.

Elle trouve une application particulière, non exclusive, dans les organes d'opération, administration et maintenance (OAM) dont sont équipés certains équipements de télécommunications.

Les réseaux de télécommunications font circuler un grand nombre d'éléments de données. L'analyse des occurrences d'éléments de données de types déterminés est utile aux opérateurs pour améliorer ou optimiser le fonctionnement de leurs réseaux et pour y détecter d'éventuels dysfonctionnements.

A titre d'exemple, dans un réseau ATM (« Asynchronous Transfer Mode »), les éléments de données dont les occurrences sont analysées peuvent être les cellules ATM transmises suivant une connexion virtuelle spécifiée, ce qui permet d'analyser le comportement en débit de la source des cellules et/ou la réponse du réseau vis-à-vis de cette source.

Comme autre exemple d'application de l'invention, on peut citer les analyseurs de protocole. Les éléments de données considérés peuvent alors correspondre à des messages de type spécifié d'un protocole de signalisation.

Lors du déploiement d'un réseau, la configuration des équipements leur permet a priori de relever les occurrences de divers types d'éléments de données. Il suffit de prévoir les ressources logicielles adéquates dans ces équipements. Les éléments à détecter dans une situation donnée sont définis au moyen des organes d'OAM du réseau, qui activent les ressources logicielles en question puis recueillent les résultats des observations.

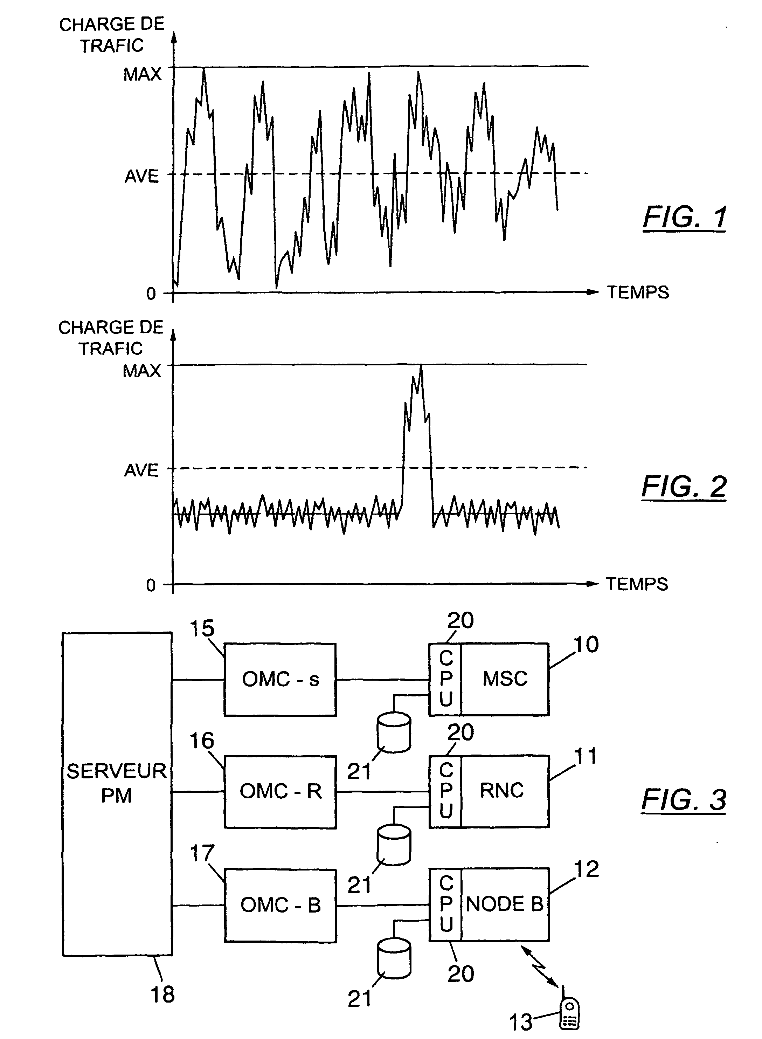

Les mécanismes d'observation courants sont basés sur des compteurs qui assurent des opérations telles que dénombrement d'événements sur des périodes données, calcul de valeurs cumulées, moyennes, minimales, maximales, ... Bien qu'ils fournissent de l'information intéressante, ces compteurs ne permettent pas d'évaluer un profil de trafic sur une période d'observation donnée. En particulier, ils ne permettent pas d'évaluer le caractère plus ou moins saccadé du trafic observé. Par exemple, il est bien évident que les profils de trafic illustrés, en unités arbitraires, par les courbes des figures 1 et 2 correspondent à des comportements très différents du réseau, bien qu'ils donnent lieu à des valeurs semblables pour la valeur maximale (MAX) et la valeur moyenne (AVE) de la charge de trafic observée.

Pour évaluer un profil de trafic, c'est-à-dire la distribution temporelle des événements détectés sur une période d'observation donnée, on utilise couramment une méthode d'échantillonnage consistant à enregistrer le nombre $k_i$ d'événements survenant durant une unité de temps donnée. Par exemple, un octet est utilisé toutes les millisecondes pour enregistrer le nombre d'événements détectés au cours de la milliseconde précédente. L'unité de temps retenue est fixée avant le début de la période d'observation, ainsi que le nombre de bits adopté pour l'enregistrement de chaque nombre d'événements. Un inconvénient de cette méthode est que des zéros sont enregistrés inutilement lorsque le trafic observé a des plages de silence.

Dans une autre méthode d'échantillonnage (EP-A-0944289), la grandeur d'échantillonnage (nombre d'événements détectés) est constante, soit $k_1 = k_2 = ... = k$, et les données enregistrées représentent les temps d'échantillonnage $T_i$ mis pour détecter k nouvelles occurrences de l'événement. Cette méthode évite que l'échantillonnage génère des données dans les plages de silence. Elle implique généralement une approximation lorsque les temps relevés sont représentés sous forme d'entiers.

Les deux méthodes précédentes n'ont pas un comportement satisfaisant en présence de variations fortes de la cadence des événements détectés. Avec la première méthode, une augmentation de la cadence peut provoquer un débordement du fait que l'espace prévu pour enregistrer le nombre $k_i$ peut devenir insuffisant, alors qu'une augmentation de cet espace augmente la consommation inutile de mémoire ou de bande passante dans les plages de silence. Avec la seconde méthode, une augmentation de la cadence implique la production de données abondantes pour représenter des temps d'échantillonnage courts. Dans les deux cas, le volume de données générées par la méthode d'échantillonnage n'est pas optimal.

Ce type d'analyse de profil de trafic pose ainsi des difficultés lorsqu'elle porte sur la distribution temporelle d'occurrences très fréquentes. Les éléments de données considérés sont typiquement manipulés par un processeur ou par des circuits logiques supervisés par un processeur. Le dénombrement de leurs occurrences et le codage des données $k_i$ ou $T_i$ sont assurés par ce processeur. Les données de codage étant relativement abondantes, elles sont souvent stockées dans une mémoire locale avant d'être transmises pour analyse. Le processeur est alors sollicité pour écrire au fur et à mesure les données sur disque puis pour les lire et les transmettre à un serveur d'OAM distant. Les données de codage produites mobilisent donc des ressources non négligeables du processeur (temps CPU) pour être écrites puis lues sur disque et/ou transmises. Or les ressources du processeur sont relativement précieuses, particulièrement dans le cas où les événements pris en compte sont très fréquents puisque les contraintes de performances du processeur sont alors plus sévères.

Un but de la présente invention est de remédier aux difficultés ci-dessus en proposant une méthode d'échantillonnage efficace permettant de contrôler la quantité de données générées pour rendre compte des observations.

EP 1 276 277 B1

L'invention propose ainsi un procédé tel qu'énoncé dans la revendication 1.

Le procédé utilise des grandeurs d'échantillonnage $k_{i+1}$ adaptatives en fonction des valeurs quantifiées des temps d'échantillonnage $T_i$ précédemment observés (i = 1, 2, 3, ...). Il prend ainsi en compte, implicitement ou explicitement, la cadence instantanée des événements détectés, ce qui permet de bien suivre les variations de cette cadence. Quand cette cadence est faible, $k_i$ est prise relativement élevée. Quand elle augmente, la mise à jour diminue la grandeur $k_i$. Ceci permet une certaine prédictibilité du temps d'échantillonnage $T_i$, et donc un codage efficace de ce paramètre, de sorte qu'on maîtrise la quantité de données de codage générées par le procédé.

Le serveur d'OAM, qui dépouille les données de codage, est capable d'initialiser la grandeur d'échantillonnage $k_1$ de la même façon que l'unité émettrice qui a détecté les événements. Elle lui associe la valeur quantifiée $t_1$ du premier temps d'échantillonnage $T_1$, récupérée d'après les données de codage, et elle en déduit la grandeur d'échantillonnage $k_2$ par la même relation de mise à jour qui a été utilisée par l'unité émettrice. Par récurrence, les i-ièmes données de codage définissent une valeur quantifiée $t_i$ du temps d'échantillonnage $T_i$ et permettent de calculer $k_{i+1}$. La lecture successive des données de codage permet ainsi au serveur d'OAM de déterminer la totalité des couples $(k_i, t_i)$ qui, selon les besoins, peuvent être retraités pour produire des histogrammes de trafic (avec un pas de temps constant) avec de petites approximations, ou pour calculer toutes sortes de grandeurs statistiques (moyenne, variance, minima, maxima, ...).

Dans une réalisation particulière du procédé, une cadence d'événements est explicitement estimée à chaque itération du processus. La mise à jour de la grandeur d'échantillonnage comprend alors le calcul d'une cadence d'événements estimée en fonction de paramètres incluant la précédente grandeur d'échantillonnage et la valeur quantifiée du temps d'échantillonnage. La grandeur d'échantillonnage mise à jour est ensuite déduite de la cadence estimée.

La grandeur d'échantillonnage mise à jour est typiquement un entier sensiblement proportionnel à la cadence d'événements estimée. Cet entier peut notamment être $\lceil Z.\lambda.n/S \rceil$, où Z est une durée totale d'observation prédéfinie, $\lambda$ est la cadence d'événements estimée, n est un nombre de bits utilisé pour former les données de codage représentant une valeur quantifiée du temps, S est une taille de données prédéfinie exprimée en nombre de bits. Dans la notation ci-dessus, pour un nombre y, $\lceil y \rceil$ représente l'entier égal ou immédiatement supérieur à y.

La cadence d'événements estimée est avantageusement calculée sous la forme $(1-x).\lambda + x.K/t$, où x est un coefficient pondérateur compris entre 0 et 1, $\lambda$ est ici la cadence d'événements estimée en vigueur avant l'itération courante, K est la grandeur d'échantillonnage précédente et t est la valeur quantifiée du temps d'échantillonnage de l'itération courante.

Le nombre x permet de sélectionner la sensibilité de l'estimateur de la cadence. Une valeur proche de zéro restreint les variations de $\lambda$ et donc le caractère adaptatif du procédé, tandis qu'une valeur proche de 1 peut provoquer des variations brutales de l'estimateur.

Dans une réalisation avantageuse du procédé, la quantification du temps d'échantillonnage comporte la production de données de codage incluant au moins un index de n bits, n étant un entier prédéfini plus grand que 3, et la production de ces données de codage comprend les étapes suivantes :

- déterminer d'un intervalle de temps de prédiction ;
- si le temps d'échantillonnage est au-dessous de l'intervalle de prédiction, délivrer un index ayant une première valeur et remplacer l'intervalle de prédiction par un nouvel intervalle de temps situé immédiatement au-dessous de l'intervalle précédent ;
- si le temps d'échantillonnage est au-dessus de l'intervalle de prédiction, délivrer un index ayant une seconde valeur et remplacer l'intervalle de prédiction par un nouvel intervalle de temps situé immédiatement au-dessus de l'intervalle précédent ; et
- si le temps d'échantillonnage est dans l'intervalle de prédiction, délivrer un index ayant une valeur distincte des première et seconde valeurs et représentative de la position du temps d'échantillonnage dans l'intervalle de prédiction.

L'intervalle de temps de prédiction initialement déterminé est typiquement positionné par rapport à une valeur de prédiction égale au rapport entre la grandeur d'échantillonnage et la cadence d'événements estimée.

Pour optimiser la précision du procédé, on peut utiliser un paramètre de décalage initialisé à zéro puis mis à jour à chaque itération du processus en fonction de la différence entre le temps d'échantillonnage relevé et la valeur quantifiée de ce temps d'échantillonnage. Dans certaines au moins des itérations (de préférence toutes), on tient compte de ce paramètre de décalage dans le décompte du temps d'échantillonnage.

Un autre aspect de l'invention se rapporte à un équipement de télécommunication, comprenant des moyens de transmission et/ou de réception d'un trafic incluant des éléments de données successifs, des moyens de détection des occurrences d'un type spécifié d'éléments de données dans ledit trafic et des moyens de codage pour délivrer des données de codage rendant compte de la distribution temporelle des occurrences détectées, ces moyens de codage étant agencés pour mettre en oeuvre un procédé tel que défini ci-dessus.

Un troisième aspect de l'invention se rapporte à un programme d'ordinateur, chargeable dans une mémoire associée à un processeur, et comprenant des portions de code pour la mise en oeuvre d'un procédé tel que défini ci-dessus lors de l'exécution dudit programme par le processeur.

D'autres particularités et avantages de la présente invention apparaîtront dans la description ci-après d'exemples de réalisation non limitatifs, en référence aux dessins annexés, dans lesquels :

- les figures 1 et 2, précédemment commentées, sont des graphiques illustrant deux exemples de profils de trafic ;
- la figure 3 est un schéma synoptique d'un exemple d'infrastructure de télécommunication à laquelle l'invention est applicable ;
- la figure 4 est un organigramme d'opérations effectuées dans un exemple de procédé conforme à l'invention ;
- la figure 5 est un organigramme d'une procédure de quantification des temps d'échantillonnage utilisable dans le procédé selon la figure 4 ;
- la figure 6 est un organigramme d'une procédure de décodage des données générées par un procédé selon les figures 4 et 5 ; et
- la figure 7 est un organigramme d'une procédure utilisable en liaison avec celle de la figure 6 pour restituer des histogrammes de trafic avec un pas de temps constant.

En référence à la figure 3, l'invention est illustrée dans son application aux organes d'OAM d'un réseau cellulaire de radio communication de troisième génération de type UMTS (« Universal Mobile Telecommunications System »). De façon connue, un tel réseau comporte des commutateurs 10, de type MSC (« Mobile Switching Center ») pour le mode circuit ou GSN (« GPRS Support Node ») pour le mode paquets, et un réseau d'accès radio (RAN, « Radio Access Network »). Le RAN comporte des contrôleurs de réseau radio 11 (RNC, « Radio Network Controller ») reliés chacun à un MSC, et des unités 12 appelées « node B » reliées chacune à un RNC. Chaque node B 12 comporte une ou plusieurs stations de base fournissant des liaisons radio avec les terminaux radio 13.

Chaque unité 10-12 du réseau est associée à un serveur d'opération et maintenance 15-17 (OMC, « Operation and Maintenance Center ») ayant notamment pour rôle de la configurer. Dans l'exemple de la figure 1, ces serveurs 15-17 sont appelés OMC-s pour les MSC 10, OMC-R pour les RNC 11 et OMC-B pour les nodes B 12. Pour le suivi des performances, les OMC 15-17 sont reliés avec un serveur 18 appelé serveur PM (« Performance Monitoring ») qui traite les données collectées en vue de leur exploitation par l'administrateur du réseau. Les architectures d'OAM et les interfaces correspondantes dans les réseaux UMTS sont connues et décrites dans les spécifications techniques 3G TS 32.102, v3.2.0 (« 3G Telecom Management Architecture, Release 1999) », 3G TS 32.104, v3.4.0 (« Telecommunication Management; 3G Performance Management, Release 1999) », et 3G TS 32.106-1, v3.1.0 (« Telecommunication Management; Configuration Management; Part 1 : 3G Configuration Management: Concept and Requirements Release 1999) », publiées par le 3GPP (« Third Generation Partnership Project »).

Les éléments de réseau, notamment les MSC 10, RNC 11 et node B 12, comportent chacun des processeurs (CPU) 20 chargés entre autres de fonctions de système d'opérations du réseau (OSF). Ces processeurs 20 sont configurables par les serveurs 15-17 pour opérer la détection d'un certain nombre d'événements spécifiés, qui peuvent par exemple être des occurrences d'unités de données de protocole (PDU) ou de messages de signalisation de types particuliers, émis ou reçus par l'élément de réseau 10-12.

Ces processeurs 20 peuvent être associés à des unités de stockage local 21 utilisées notamment pour l'enregistrement temporaire de données de codage générées au cours de l'observation des événements spécifiés, afin rendre compte ultérieurement de la distribution temporelle de ces événements aux serveurs d'OAM 15-18.

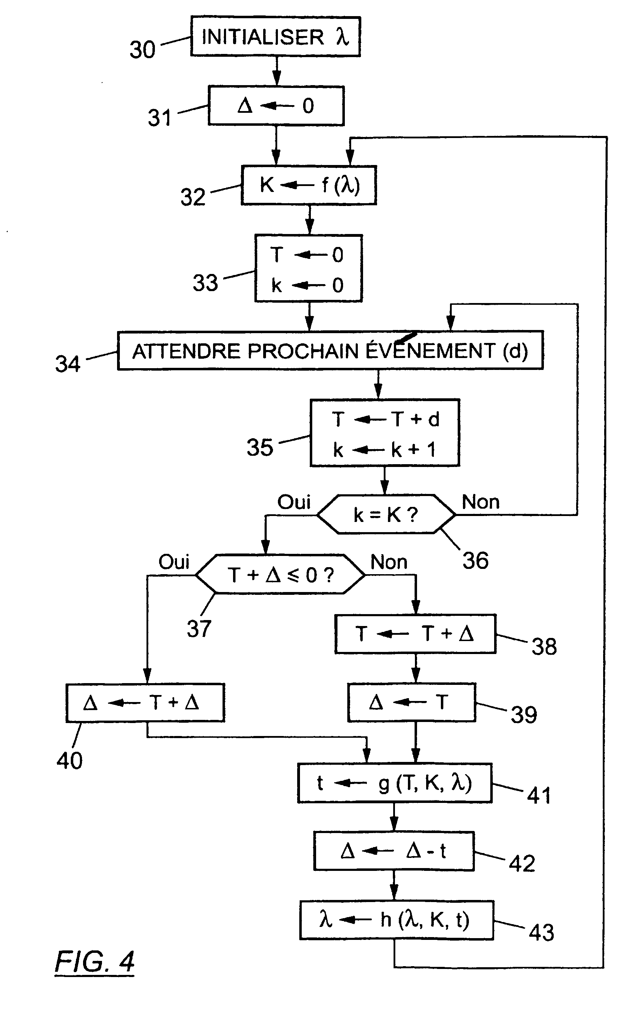

Les traitements effectués par le processeur 20 d'un élément de réseau 10-12 afin de structurer les données à fournir aux serveurs d'OAM pour rendre compte des événements détectés sont par exemple conformes à la procédure illustrée par la figure 4.

Cette procédure utilise une estimation $\lambda$ de la cadence des événements, à partir de laquelle les grandeurs d'échantillonnage $k_i$ sont calculées. Si l'utilisateur (administrateur du réseau) a une idée de la cadence moyenne globale des événements à détecter, cette valeur peut être affectée au paramètre $\lambda$ lors de l'initialisation 30. Sinon, la cadence estimée $\lambda$ est initialisée à une valeur arbitraire faible (mais non nulle) pour que le modèle d'estimation s'adapte assez rapidement.

La procédure de la figure 4 utilise également un paramètre de décalage $\Delta$ servant à affiner la précision des temps d'échantillonnage mesurés. Ce paramètre de décalage $\Delta$ est initialisé à zéro à l'étape 31.

A l'étape 32, la grandeur d'échantillonnage K (= $k_i$ lors de la i-ième itération) est calculée en fonction de la cadence d'événements estimée courante $\lambda$ :

$$K = f(\lambda) \tag{1}$$

De préférence, cette grandeur K est proportionnelle à la cadence estimée λ, aux erreurs d'arrondi près. La fonction f peut notamment être définie par :

$$f(\lambda) = [Z.\lambda.n/S] \tag{2}$$

où les paramètres Z, n et S sont fixés par l'utilisateur et fournis au processeur 20 par le serveur d'OAM 15-17 au moment de la commande d'exécution du procédé. Le paramètre Z est une durée totale d'observation des événements par le processeur 20. Le paramètre n est un nombre de bits utilisé pour former les données de codage représentant une valeur quantifiée du temps d'échantillonnage (par exemple n = 8 pour une quantification sur un octet). Le paramètre S représente un objectif de taille de fichier à générer au cours de la période d'observation Z, exprimé en nombre de bits (par exemple S = 8192 (bits) pour un objectif de taille de 1 kilo-octet).

Avant la première itération de la boucle représentée sur la figure 4, les étapes 30 et 32 conduisent à initialiser la grandeur d'échantillonnage K = $k_1$. Chaque itération conduit à recalculer une cadence d'événements estimée λ, à partir de laquelle la prochaine grandeur d'échantillonnage $k_{i+1}$ sera mise à jour en ré-appliquant la fonction f à l'étape 32.

Dans chacune de ces itérations, les variables T (temps d'échantillonnage) et k (compteur d'événements) sont initialisées à zéro à l'étape 33. Le processeur 20 se met alors en attente du prochain événement à détecter (étape 34). Lorsque ce prochain événement survient, au bout d'une durée d mesurée après le précédent événement, la variable T est augmentée de cette durée d et l'entier k est incrémenté d'une unité à l'étape 35. Le processeur compare alors l'entier k à la grandeur d'échantillonnage K (= $k_i$) lors du test 36. Si k < K, la procédure ne nécessite pas immédiatement d'autres calculs et le processeur revient simplement en attente de l'événement suivant à l'étape 34.

Quand k = K lors du test 36, le nombre d'événement attendu a été atteint, de sorte que le processeur 20 produit des données de codage du temps d'échantillonnage relevé. Ce temps d'échantillonnage est égal à la quantité T+Δ, à moins que celle-ci soit négative. Si T+Δ > 0 au test 37, le temps T est donc augmenté de Δ à l'étape 38, et la même quantité est provisoirement affectée au décalage Δ à l'étape 39. Si T+Δ ≤ 0 au test 37, la valeur de T (> 0) n'est pas modifiée et celle du décalage Δ (< 0) est remplacée par Δ+T à l'étape 40. La quantification du temps d'échantillonnage T est ensuite effectuée à l'étape 41.

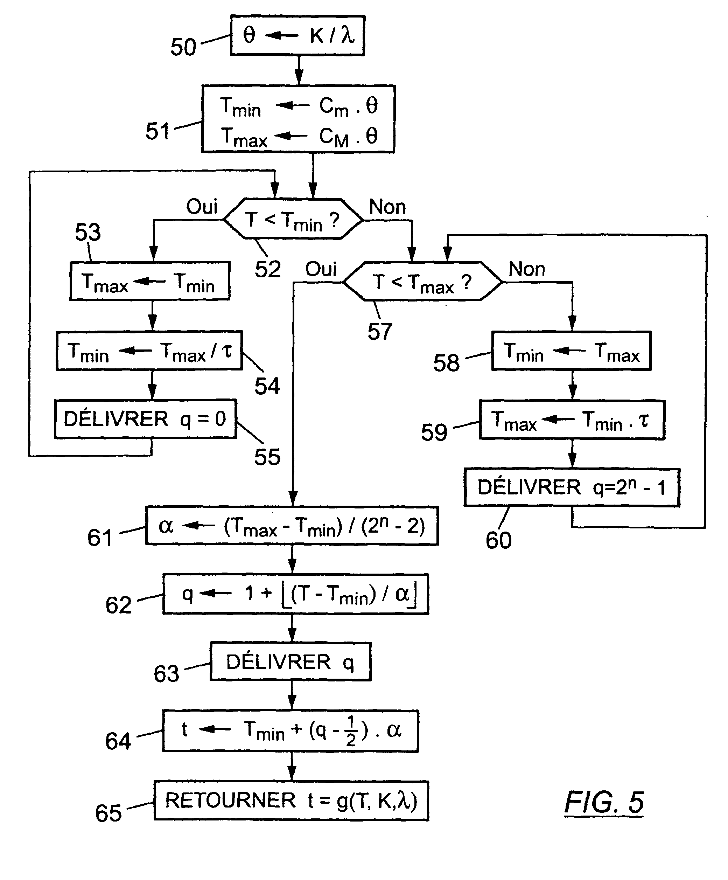

Dans l'exemple de la figure 4, la valeur quantifiée t du temps d'échantillonnage T est calculée en appliquant une fonction g aux trois variables T, K et λ. Un exemple en sera décrit ci-après en référence à la figure 5. L'étape de quantification 41 comporte la production de données de codage qui caractérisent la valeur quantifiée t.

A l'étape suivante 42 de la boucle, le paramètre de décalage Δ est mis à jour en retranchant la valeur quantifiée t du temps d'échantillonnage relevé T à la valeur provisoire de ce paramètre Δ déterminée à l'étape 39 ou 40.

La cadence d'événements λ est ré-estimée à l'étape 43 à l'aide d'une fonction h de trois variables constituées par la précédente valeur de la cadence estimée λ, la grandeur d'échantillonnage courante K et la valeur quantifiée t du temps d'échantillonnage qui vient d'être calculée à l'étape 41. Le processeur met à jour la grandeur d'échantillonnage K à l'étape 32 après cette ré-estimation 43 de la cadence d'événements λ.

Une expression avantageuse de la fonction h est :

$$h(\lambda, K, t) = (1-x).\lambda + x.K/t \tag{3}$$

où le coefficient pondérateur x est tel que 0 < x ≤ 1. Ce coefficient x est par exemple fourni au processeur 20 avec les paramètres définissant les conditions d'observation. Il peut aussi être un coefficient adaptatif en fonction de la variabilité des temps d'échantillonnage relevés. Les plus petites valeurs de x diminuent la sensibilité de l'estimateur de la cadence λ. Dans le cas limite où x = 1, qui conduit à prendre λ = K/t, seul le trafic de l'itération courante est pris en compte pour estimer λ, ce qui peut conduire à des variations brusques de l'estimateur. A titre d'exemple, le coefficient x peut être pris égal à 0,1.

Il est à noter que d'autres méthodes d'estimation de la cadence d'événements λ peuvent être utilisées à l'étape 43. Par exemple, si le processeur 20 garde en mémoire la somme cumulée

$$S_i = \sum_{j=1}^{i} k_j$$

des grandeurs d'échantillonnage $k_j$ successivement utilisées au cours des itérations j = 1, 2, ..., i ainsi que la somme cumulée

$$S'_i = \sum_{j=1}^{i} t_j$$

des valeurs quantifiées $t_j$ des temps d'échantillonnage correspondants, alors il peut calculer la cadence d'événements $\lambda = \lambda_{i+1}$ à la fin de la i-ième itération sous la forme :

$$\lambda_{i+1} = S_i/S'_i \qquad (4)$$

L'estimateur (3) est cependant préférable car il permet de mieux suivre les variations du modèle tout en permettant d'ajuster sa sensibilité.

Diverses méthodes sont utilisables pour quantifier les temps d'échantillonnage T à l'étape 39. Une méthode simple mais peu économe en espace mémoire consiste à délivrer, comme données de codage, un nombre exprimé en virgule flottante et représentant une valeur quantifiée t égale au temps d'échantillonnage relevé T. Dans ce cas, il n'est pas nécessaire de prendre en compte un paramètre de décalage $\Delta$.

La figure 5 montre un mode de quantification préféré des temps d'échantillonnage, qui repose sur un intervalle de temps de prédiction $[T_{min}, T_{max}[$ initialement positionné par rapport à une valeur de prédiction $\theta = K/\lambda$.

La quantification utilisant des indices de n bits, l'intervalle de prédiction $[T_{min}, T_{max}[$ est divisé en $2^n-2$ segments équirépartis de longueur :

$$\alpha = \frac{T_{max} - T_{min}}{2^n - 2} \qquad (5)$$

Quand le temps d'échantillonnage T tombe entre $T_{min}$ et $T_{max}$, il est quantifié par un indice de n bits représentant un nombre q compris entre 1 et $2^n-2$, représentatif de la position du temps T dans l'intervalle de prédiction. Ce nombre q est donné par :

$$q = 1 + \left\lfloor \frac{T - T_{min}}{\alpha} \right\rfloor \qquad (6)$$

où, pour un nombre y, $\lfloor y \rfloor$ représente l'entier égal ou immédiatement inférieur à y. La valeur quantifiée correspondante t, qui réalise une approximation du temps d'échantillonnage T, est alors donnée par :

$$t = T_{min} + (q - \tfrac{1}{2}).\alpha \qquad (7)$$

Quand le temps d'échantillonnage T est inférieur à $T_{min}$, l'intervalle de prédiction $[T_{min}, T_{max}[$ est décalé vers la gauche et l'index q = 0 est délivré. Quand le temps d'échantillonnage T est supérieur à $T_{max}$, l'intervalle de prédiction $[T_{min}, T_{max}[$ est décalé vers la droite et l'indice $q = 2^n-1$ est délivré.

En référence à la figure 5, cette procédure de quantification du temps d'échantillonnage T commence à l'étape 50 par le calcul de la valeur de prédiction $\tau = K/\lambda$, d'où sont déduites les bornes de l'intervalle de prédiction initial: $T_{min} = c_m.\theta$ et $T_{max} = c_M.\theta$ (étape 51). A titre d'exemple, on peut prendre $c_M = 1/c_m = 5$.

Lors du test 52, le temps d'échantillonnage T à quantifier est comparé à la borne inférieure $T_{min}$ de l'intervalle de prédiction. Si $T < T_{min}$, l'intervalle de prédiction est remplacé par un nouvel intervalle de temps situé immédiatement au-dessous de l'intervalle précédent, ce qui peut être effectué en remplaçant $T_{max}$ par $T_{min}$ à l'étape 53 puis en prenant $T_{min} = T_{max}/\tau$ à l'étape 54. L'indice q = 0 est ensuite délivré à l'étape 55 avant de procéder à nouveau au test 52. Quand $T \geq T_{min}$ au test 52, un autre test 57 est effectué pour comparer le temps d'échantillonnage T à la borne supérieure $T_{max}$ de l'intervalle de prédiction. Si $T \geq T_{max}$, l'intervalle de prédiction est remplacé par un nouvel intervalle de temps situé immédiatement au-dessus de l'intervalle précédent, ce qui peut être effectué en remplaçant $T_{min}$ par $T_{max}$ à l'étape 58 puis en prenant $T_{max} = T_{min}.\tau$ à l'étape 59. L'indice $q = 2^n-1$ est ensuite délivré à l'étape 60 avant de procéder à nouveau au test 57. Le nombre $\tau$ est par exemple égal à 5.

Quand $T_{min} \leq T < T_{max}$, le nombre $\alpha$ est calculé selon la relation (5) à l'étape 61, puis l'index q est calculé selon la relation (6) à l'étape 62. Cet index q est délivré à l'étape 63, après laquelle la valeur quantifiée t est calculée selon la relation (7) à l'étape 64. Cette valeur $t = g(T, K, \lambda)$ est retournée à l'étape 65 pour terminer l'exécution de la fonction de l'étape 41 de la figure 4. L'exécution de cette fonction a produit une ou plusieurs valeurs de l'indice q qui caractérisent la valeur de quantification t dès lors qu'on connaît la valeur de prédiction $\tau = K/\lambda$. Ce ou ces indices q sont successivement écrits par le processeur 20 dans la mémoire associée 21.

A l'issue de la procédure de la figure 4, qui se termine quand la durée spécifiée Z s'est écoulée, le fichier des données de codage est composé d'une succession de valeurs sur n bits représentant la suite des indices q. Avec la valeur d'initialisation $k_1 = f(\lambda_1)$, cette suite permet de retrouver l'ensemble des couples $(k_i, t_i)$.

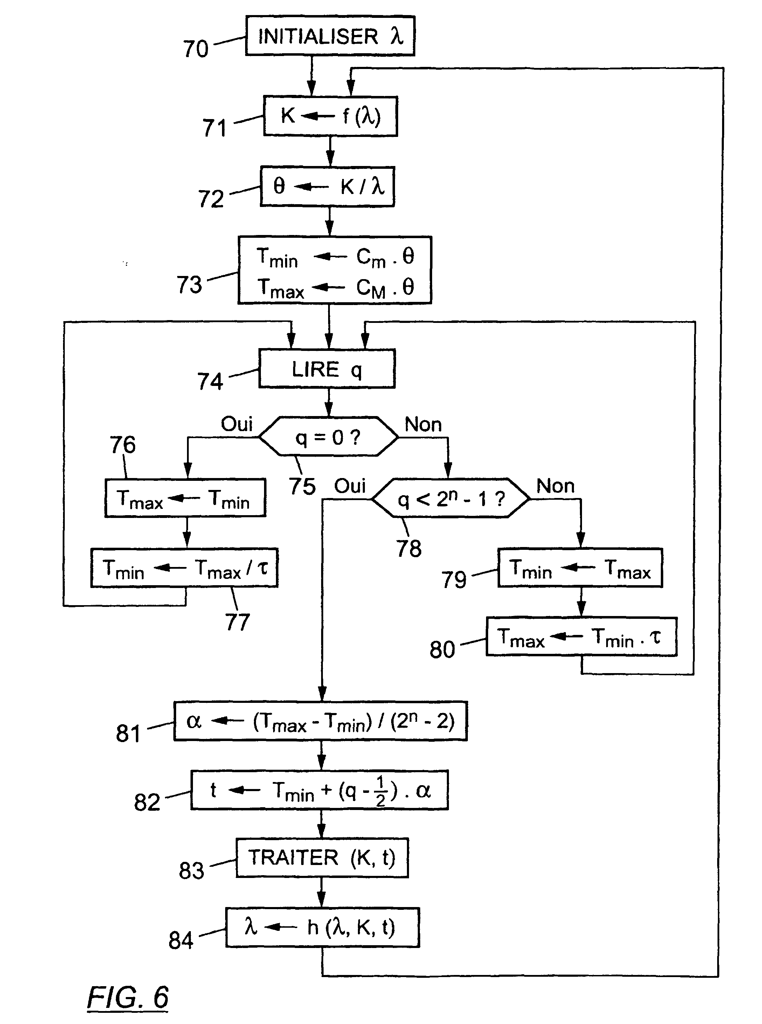

La récupération de ces informations est typiquement effectuée par le serveur PM 18 auquel est adressé le fichier contenant la suite des indices q. La procédure correspondante est illustrée par la figure 6.

Cette procédure commence par l'initialisation du nombre $K = k_1$. Dans un premier temps (étape 70), la cadence estimée $\lambda = \lambda_1$ est initialisée de la même manière qu'à l'étape 30 de la figure 4 puis, à l'étape 71, la grandeur d'échantillonnage $K = f(\lambda)$ est calculée comme à l'étape 32 de la figure 4.

La valeur de prédiction $\theta$ du temps d'échantillonnage T est calculée à l'étape 72 selon $\theta = K/\lambda$ puis, à l'étape 73, les bornes de l'intervalle de prédiction sont déterminées : $T_{min} = c_m.\theta$ et $T_{max} = c_M.\theta$.

Le prochain indice q du fichier est alors lu à l'étape 74. Si cet indice q est égal à 0 (test 75), l'intervalle de prédiction est décalé vers la gauche en remplaçant $T_{max}$ par $T_{min}$ à l'étape 76, puis $T_{min}$ par $T_{max}/\tau$ à l'étape 77, après laquelle le processus revient à l'étape 74 pour lire la prochaine valeur de l'indice q. Si $q = 2^n-1$ (test 78), l'intervalle de prédiction est décalé vers la droite en remplaçant $T_{min}$ par $T_{max}$ à l'étape 79, puis $T_{max}$ par $T_{min}.\tau$ à l'étape 80, après laquelle le processus revient à l'étape 74 pour lire la prochaine valeur de l'indice q.

Quand $1 \leq q \leq 2^n-2$, les quantités $\alpha$ et t sont respectivement calculées aux étapes 81 et 82 selon les relations (5) et (7). De cette façon, le serveur PM dispose du couple $(k_i, t_i) = (K, t)$, K ayant été calculé à l'étape 71 et t à l'étape 82. Ce couple (K, t) fait l'objet d'un traitement à l'étape 83. Divers types de traitements possibles seront exposés ci-après. A l'étape 84, la cadence d'événements estimés $\lambda$ est recalculée de la même manière qu'à l'étape 43 de la figure 4, puis le processus de la figure 6 revient à l'étape 71 précitée. Ce processus s'arrête lorsque le fichier des indices q est épuisé.

Le traitement d'un couple (K, t) à l'étape 83 peut consister simplement à mémoriser ce couple en vue de calculs ultérieurs. Il peut aussi consister à calculer des valeurs cumulées permettant, à la fin du décodage du fichier, d'obtenir des indicateurs statistiques tels que moyennes, variances, ...

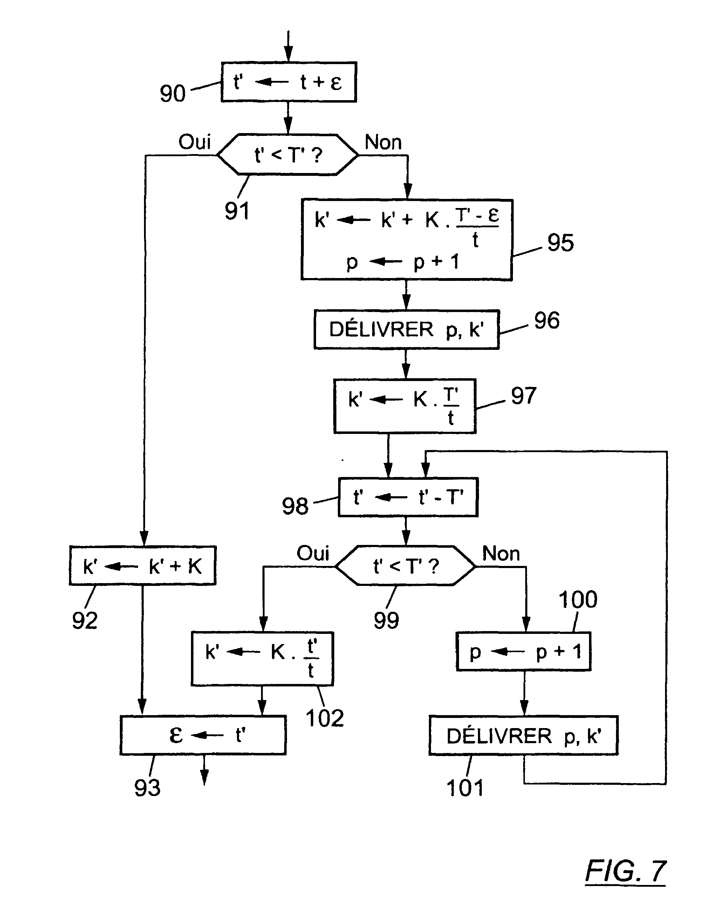

Ce traitement peut aussi consister à rétablir un histogramme de trafic avec un pas de temps uniforme T'. La figure 7 illustre les opérations correspondantes effectuées à l'intérieur de l'étape 83 de la figure 6.

Ce traitement consiste essentiellement à effectuer des interpolations linéaires des grandeurs d'échantillonnage $k_i$ lorsque les intervalles successifs de durées $t_i$ ne sont pas alignés avec les intervalles réguliers de durée T'. Il utilise une variable d'interpolation $\varepsilon \geq 0$ qui, au cours de la i-ième itération de la procédure de la figure 6, représente le décalage temporel

$$\sum_{j=1}^{i-1} t_j - T'.\left\lfloor \sum_{j=1}^{i-1} t_j \Big/ T' \right\rfloor.$$

Les intervalles de temps réguliers de durée T' sont numérotés par un indice p. Le compteur d'événements est noté k' dans la procédure de la figure 7. Les quantités $\varepsilon$, p et k' sont mises à zéro à l'étape d'initialisation 70 de la procédure de la figure 6.

Au début du traitement 83 (étape 90 de la figure 7), on détermine un temps corrigé $t' = t + \varepsilon$. Ce temps corrigé t' est comparé au pas T' lors du test 91. Si $t' < T'$, le traitement 83 consiste simplement à augmenter de K le compteur k' (étape 92), puis à affecter la valeur du temps t' à la variable $\varepsilon$ (étape 93).

Si $t' \geq T'$ lors du test 91, le compteur k' est augmenté d'une fraction de la grandeur d'échantillonnage K, c'est-à-dire de $K.(T'-\varepsilon)/t$, et l'indice p est incrémenté d'une unité à l'étape 95. A l'étape suivante 96, la p-ième valeur de l'histogramme est délivrée comme étant la valeur courante du compteur k'. Ce compteur k' reçoit ensuite la valeur $K.T'/t$ à l'étape 97. A l'étape suivante 98, le pas de l'histogramme T' est soustrait du temps corrigé t'. Après cette soustraction, si $t' \geq T'$ (test 99), l'indice p est incrémenté d'une unité à l'étape 100, puis la p-ième valeur de l'histogramme est délivrée à l'étape 101 comme étant $k' = K.T'/t$. Après cette étape 101, le processus revient à l'étape 98 précitée.

Quand $t' < T'$ au test 99, il n'y a plus de valeur d'histogramme à délivrer au cours de l'itération courante. Le compteur k' est mis à jour en lui affectant la valeur $K.t'/t$ à l'étape 102, puis la valeur du temps t' est affectée à la variable $\varepsilon$ à l'étape 93.

**EP 1 276 277 B1**

**Revendications**

1. Procédé executable par un proceseur (20) pour rendre compte de la distribution temporelle d'une succession d'événements déterminés, comprenant une initialisation d'une grandeur d'échantillonnage (K) consistant en un entier positif et plusieurs itérations successives d'un processus comportant une première étape de :

   • détection d'un nombre d'événements égal à la grandeur d'échantillonnage et relevé d'un temps d'échantillonnage (T) mis pour détecter ledit nombre d'événements ; et **caractérisé en ce qu'**il comporte les étapes supplémentaires de:

     - quantification du temps d'échantillonnage relevé à l'étape précédente pour délivrer des données de codage (q) représentant une valeur quantifiée (t) dudit temps d'échantillonnage ; et
     - mise à jour de la grandeur d'échantillonnage en fonction de paramètres incluant ladite valeur quantifiée du temps d'échantillonnage.

2. Procédé selon la revendication 1, dans lequel la mise à jour de la grandeur d'échantillonnage (K) comprend le calcul d'une cadence d'événements estimée ($\lambda$) en fonction de paramètres incluant la précédente grandeur d'échantillonnage et la valeur quantifiée (t) du temps d'échantillonnage, la grandeur d'échantillonnage mise à jour étant déduite de la cadence estimée.

3. Procédé selon la revendication 2, dans lequel la cadence d'événements estimée est calculée sous la forme (1-x). $\lambda$ + x.K/t, où x est un coefficient pondérateur compris entre 0 et 1, $\lambda$ est la cadence d'événements estimée en vigueur avant l'itération courante, K est la grandeur d'échantillonnage précédente et t est la valeur quantifiée du temps d'échantillonnage.

4. Procédé selon la revendication 2, dans lequel la cadence d'événements estimée au cours de la i-ième itération du processus (i $\geq$ 1) est calculée sous la forme

$$\left(\sum_{j=1}^{i} k_j\right)\bigg/\left(\sum_{j=1}^{i} t_j\right),$$

   où $k_j$ est la grandeur d'échantillonnage utilisée au cours de la j-ième itération et $t_j$ est la valeur quantifiée du temps d'échantillonnage relevé au cours de la j-ième itération (1 $\leq$ j $\leq$ i).

5. Procédé selon l'une quelconque des revendications 2 à 4, dans lequel la grandeur d'échantillonnage mise à jour est un entier sensiblement proportionnel à la cadence d'événements estimée ($\lambda$).

6. Procédé selon la revendication 5, dans lequel la grandeur d'échantillonnage mise à jour est égale à $\lceil$ Z.$\lambda$.n / S $\rceil$, où Z est une durée totale d'observation prédéfinie, $\lambda$ est la cadence d'événements estimée, n est un nombre de bits utilisé pour former les données de codage représentant une valeur quantifiée du temps, S est une taille de données prédéfinie exprimée en nombre de bits, et $\lceil$ y $\rceil$ représente l'entier égal ou immédiatement supérieur à un nombre y.

7. Procédé selon l'une quelconque des revendications précédentes, dans lequel la quantification du temps d'échantillonnage (T) comporte la production de données de codage incluant au moins un index de n bits (q), n étant un entier prédéfini plus grand que 3, la production desdites données de codage comprenant les étapes suivantes :

   - déterminer d'un intervalle de temps de prédiction ;
   - si le temps d'échantillonnage est au-dessous de l'intervalle de prédiction, délivrer un index ayant une première valeur et remplacer l'intervalle de prédiction par un nouvel intervalle de temps situé immédiatement au-dessous de l'intervalle précédent ;
   - si le temps d'échantillonnage est au-dessus de l'intervalle de prédiction, délivrer un index ayant une seconde valeur distincte de la première valeur et remplacer l'intervalle de prédiction par un nouvel intervalle de temps situé immédiatement au-dessus de l'intervalle précédent ; et
   - si le temps d'échantillonnage est dans l'intervalle de prédiction, délivrer un index ayant une valeur distincte des première et seconde valeurs et représentative de la position du temps d'échantillonnage dans l'intervalle de prédiction.

8. Procédé selon chacune des revendications 2 et 7, dans lequel un intervalle de temps de prédiction initialement déterminé est positionné par rapport à une valeur de prédiction (θ) égale au rapport entre la grandeur d'échantillonnage (K) et la cadence d'événements estimée (λ).

9. Procédé selon l'une quelconque des revendications précédentes, dans lequel on initialise à zéro un paramètre de décalage (Δ), et à chaque itération dudit processus le paramètre de décalage est mis à jour en fonction de la différence entre le temps d'échantillonnage relevé et la valeur quantifiée dudit temps d'échantillonnage, et dans lequel le paramètre de décalage intervient dans le décompte du temps d'échantillonnage dans certaines au moins des itérations.

10. Procédé selon l'une quelconque des revendications 1 à 6, dans lequel la quantification du temps d'échantillonnage (T) consiste à délivrer, comme données de codage, un nombre exprimé en virgule flottante représentant une valeur quantifiée égale au temps d'échantillonnage relevé.

11. Equipement de télécommunication, comprenant des moyens (10-12) de transmission et/ou de réception d'un trafic incluant des éléments de données successifs, des moyens (20) de détection des occurrences d'un type spécifié d'éléments de données dans ledit trafic et des moyens (20) de codage pour délivrer des données de codage rendant compte de la distribution temporelle des occurrences détectées, **caractérisé en ce que** les moyens de codage sont agencés pour mettre en oeuvre un procédé selon l'une quelconque des revendications précédentes.

12. Programme d'ordinateur, chargeable dans une mémoire associée à un processeur (20), **caractérisé en ce qu'**il comprend des portions de code pour la mise en oeuvre d'un procédé selon l'une quelconque des revendications 1 à 10 lors de l'exécution dudit programme par le processeur.

## Patentansprüche

1. Verfahren, das durch einen Prozessor (20) ausführbar ist, zum Berichten der zeitlichen Verteilung einer Aufeinanderfolge bestimmter Ereignisse, mit
    einer Initialisierung einer Abtastgröße (K), die in einer positiven Ganzzahl besteht, und
    mehreren aufeinanderfolgenden Iterationen eines Vorgangs, der einen ersten Schritt enthält zum:

    Erfassen einer Anzahl von Ereignissen, die gleich der Abtastgröße ist, und Aufnahme einer Abtastzeit (T), die zum Erfassen dieser Anzahl von Ereignissen gebraucht wird;
    und **dadurch gekennzeichnet ist, dass** er die ergänzenden Schritte enthält zum:

    Quantifizieren der in dem vorausgehenden Schritt aufgenommenen Abtastzeit zum Liefern von Codierungsdaten (q), die einen quantifizierte Wert (t) der Abtastzeit darstellen; und
    Aktualisieren der Abtastgröße als Funktion von Parametern, die den quantifizierten Wert der Abtastzeit einschließen.

2. Verfahren nach Anspruch 1, bei dem das Aktualisieren der Abtastgröße (K) die Berechnung eines abgeschätzten Ereignistakts (λ) enthält als Funktion von Parametern, die die vorausgehende Abtastgröße und den quantifizierten Wert (t) der Abtastzeit einschließen, wobei die aktualisierte Abtastgröße aus dem abgeschätzten Takt hergeleitet wird.

3. Verfahren nach Anspruch 2, bei dem der abgeschätzte Ereignistakt in der Form $(1-x).\lambda + x.K/t$ berechnet wird, wobei x ein Wichtungsfaktor ist, der zwischen 0 und 1 liegt, λ der abgeschätzte Ereignistakt ist, der vor der laufenden Iteration in Kraft ist, K die vorausgehende Abtastgröße ist und t der quantifizierte Wert der Abtastzeit ist.

4. Verfahren nach Anspruch 2, bei dem der im Verlauf der i-ten Iteration des Vorgangs ($i \geq 1$) abgeschätzte Ereignistakt in der Form

EP 1 276 277 B1

$$\left(\sum_{j=1}^{i} k_j\right)\bigg/\left(\sum_{j=1}^{i} t_j\right)$$

berechnet wird, wobei $k_j$ die im Verlauf der j-ten Iteration verwendete Abtastgröße ist und $t_j$ der quantifizierte Wert der im Verlauf der j-ten Iteration aufgenommenen Abtastzeit ist ($1 \le j \le i$).

5. Verfahren nach einem der Ansprüche 2 bis 4, bei dem die aktualisierte Abtastgröße eine Ganzzahl ist, die im Wesentlichen proportional zu dem abgeschätzten Ereignistakt ($\lambda$) ist.

6. Verfahren nach Anspruch 5, bei dem die aktualisierte Abtastgröße gleich $\lceil Z.\lambda.n/S \rceil$ ist, wobei Z eine vorbestimmte Gesamtbeobachtungsdauer ist, $\lambda$ der abgeschätzte Ereignistakt ist, n eine Anzahl von Bits ist, die zum Bilden der Codierungsdaten verwendet werden, die einen quantifizierte Wert der Zeit darstellen, S eine vorbestimmte Datengröße ist, die in einer Anzahl von Bits ausgedrückt ist, und $\lceil y \rceil$ die Ganzzahl darstellt, die gleich einer Zahl y ist oder unmittelbar über ihr liegt.

7. Verfahren nach einem der vorausgehenden Ansprüche, bei dem
das Quantifizieren der Abtastzeit (T) das Erzeugen von Codierdaten mit zumindest einem Index von n Bits (q) umfasst, wobei n eine vordefinierte Ganzzahl größer als drei ist und das Erzeugen der Codierdaten die folgenden Schritte enthält:

Festlegen eines Voraussagezeitintervalls;
wenn die Abtastzeit unterhalb des Voraussageintervalls liegt, Liefern eines Index mit einem ersten Wert und Ersetzen des Voraussageintervalls durch ein neues Zeitintervall, das unmittelbar unterhalb des vorausgehenden Intervalls liegt;
wenn die Abtastzeit oberhalb des Voraussageintervalls liegt, Liefern eines Index mit einem zweiten Wert, der von dem ersten Wert verschieden ist, und Ersetzen des Voraussageintervalls durch ein neues Zeitintervall, das unmittelbar oberhalb des vorausgehenden Intervalls liegt;
wenn die Abtastzeit in dem Voraussageintervall liegt, Liefern eines Index mit einem Wert, der von dem ersten und zweiten Wert verschieden ist und repräsentativ für die Lage der Abtastzeit in dem Voraussageintervall ist.

8. Verfahren nach jedem der Ansprüche 2 und 7, bei dem ein anfänglich bestimmtes Voraussagezeitintervall im Verhältnis zu einem Voraussagewert ($\theta$) gleich einem Verhältnis zwischen der Abtastgröße (K) und dem abgeschätzten Ereignistakt ($\lambda$) positioniert wird.

9. Verfahren nach einem der vorausgehenden Ansprüche, bei dem ein Versatzparameter ($\Delta$) auf Null initialisiert wird und
der Versatzparameter bei jeder Iteration des Vorgangs aktualisiert wird als Funktion des Unterschieds zwischen der aufgenommenen Abtastzeit und dem quantifizierten Wert dieser Abtastzeit;
wobei der Versatzparameter zumindest in bestimmten der Iterationen in das Ausrechnen der Abtastzeit eingreift.

10. Verfahren nach einem der Ansprüche 1 bis 6, bei dem das Quantifizieren der Abtastzeit (T) darin besteht, als Codierdaten eine als Fließkomma ausgedrückte Zahl zu liefern, die einen quantifizierten Wert darstellt, der gleich der aufgenommenen Abtastzeit ist.

11. Telekommunikationseinrichtung mit
Mitteln (10-12) zum Senden und/oder Empfangen eines Verkehrs, der aufeinanderfolgende Datenelemente enthält,
Mitteln (20) zum Erfassen der Auftritte einer bestimmten Art von Datenelementen in dem Verkehr und
Codiermitteln (20) zum Liefern von Codierdaten, die über die zeitliche Verteilung der erfassten Auftritte berichten,
**dadurch gekennzeichnet, dass**
die Codiermittel zum Durchführen eines Verfahrens nach irgendeinem der vorausgehenden Ansprüche ausgebildet sind.

12. Rechnerprogramm, das in einen einem Prozessor (20) zugeordneten Speicher geladen werden kann,

**dadurch gekennzeichnet, dass**

es Codeabschnitte enthält zum Durchführen eines Verfahrens nach irgendeinem der Ansprüche 1 bis 10 während des Ausführens des Programms durch den Prozessor.

**Claims**

1. A method executable by a processor (20) for reporting the time distribution of a succession of specified events, comprising an initialization of a sampling quantity (K) consisting of a positive integer and a plurality of successive iterations of a scheme comprising a first step of:

   - detecting a number of events equal to the sampling quantity and metering a sampling time (T) taken to detect said number of events; and

   **characterized in that** it comprises the additional steps of:

   - quantizing the sampling time metered in the preceding step to output coding data (q) representing a quantized value (t) of said sampling time; and
   - updating the sampling quantity as a function of parameters including said quantized value of the sampling time.

2. A method according to Claim 1, wherein the updating of the sampling quantity (K) comprises calculating an estimated event rate ($\lambda$) as a function of parameters including the preceding sampling quantity and the quantized value (t) of the sampling time, whereby the updated sampling quantity is deduced from the estimated rate.

3. A method according to Claim 2, wherein the estimated event rate is calculated in the form $(1-x).\lambda + x.K/t$, where x is a weighting coefficient lying between 0 and 1, $\lambda$ is the estimated event rate in force before the current iteration, K is the preceding sampling quantity and t is the quantized value of the sampling time.

4. A method according to Claim 2, wherein the event rate estimated in the i-th iteration of the scheme ($i \geq 1$) is calculated in the form

$$\left(\sum_{j=1}^{i} k_j\right)\bigg/\left(\sum_{j=1}^{i} t_j\right),$$

where $k_j$ is the sampling quantity used in the j-th iteration and $t_j$ is the quantized value of the sampling time metered in the j-th iteration ($1 \leq j \leq i$).

5. A method according to any one of Claims 2 to 4, wherein the updated sampling quantity is an integer substantially proportional to the estimated event rate ($\lambda$).

6. A method according to Claim 5, wherein the updated sampling quantity is equal to $\lceil Z.\lambda.n/S \rceil$, where Z is a predefined total duration of observation, $\lambda$ is the estimated event rate, n is a number of bits used to form the coding data representing a quantized time value, S is a predefined data size expressed as a number of bits, and $\lceil y \rceil$ represents the integer equal to or immediately greater than a number y.

7. A method according to any of the previous claims, wherein the quantizing of the sampling time (T) comprises producing coding data including at least one index of n bits (q), n being a predefined integer greater than 3, and wherein the producing of said coding data comprises the steps of:

   - determining a prediction time interval;
   - if the sampling time is below the prediction interval, outputting an index having a first value and replacing the prediction interval by a new time interval situated immediately below the preceding interval;
   - if the sampling time is above the prediction interval, outputting an index having a second value distinct from the first value and replacing the prediction interval by a new time interval situated immediately above the preceding interval; and

- if the sampling time is within the prediction interval, outputting an index having a value distinct from the first and second values and representative of the position of the sampling time in the prediction interval.

8. A method according to each of the claims 2 and 7, wherein a prediction time interval initially determined is positioned with respect to a prediction value ($\theta$) equal to the ratio of the sampling quantity (K) to the estimated event rate ($\lambda$).

9. A method according to any of the previous claims, wherein a shift parameter ($\Delta$) is initialized to zero and, in each iteration of said scheme, the shift parameter is updated as a function of the difference between the metered sampling time and the quantized value of said sampling time, and wherein the shift parameter is involved in counting down the sampling time in at least some of the iterations.

10. A method according to any of the claims 1 to 6, wherein the quantizing of the sampling time (T) consists in outputting, as coding data, a number expressed in floating point representing a quantized value equal to the metered sampling time.

11. Telecommunication equipment, comprising means (10-12) for transmitting and/or receiving traffic including successive data elements, means (20) for detecting occurrences of data elements of a particular type in said traffic and coding means (20) for outputting coding data reporting the time distribution of the occurrences detected, **characterized in that** the coding means are arranged to implement a method according to any one of the previous claims.

12. Computer program, loadable into a memory associated with a processor (20), **characterized in that** it comprises code portions for implementing a method according to any one of Claims 1 to 10 in the execution of said program by the processor.

CHARGE DE
TRAFIC

MAX

AVE

0                                                    TEMPS

_FIG. 1_

CHARGE DE
TRAFIC

MAX

AVE

0                                                    TEMPS

_FIG. 2_

15

OMC - s

20

C
P
U

MSC

10

21

16

OMC - R

20

C
P
U

RNC

11

21

17

OMC - B

C
P
U

NODE B

12

SERVEUR
PM

18

21

20

13

_FIG. 3_

30 — INITIALISER $\lambda$

31 — $\Delta \leftarrow 0$

32 — $K \leftarrow f(\lambda)$

33 — $T \leftarrow 0$
$k \leftarrow 0$

34 — ATTENDRE PROCHAIN ÉVÉNEMENT (d)

35 — $T \leftarrow T + d$
$k \leftarrow k + 1$

Oui — $k = K$ ? — Non

36

Oui — $T + \Delta \leq 0$ ? — Non

37

$T \leftarrow T + \Delta$ — 38

$\Delta \leftarrow T + \Delta$

40

$\Delta \leftarrow T$ — 39

$t \leftarrow g(T, K, \lambda)$ — 41

$\Delta \leftarrow \Delta - t$ — 42

$\lambda \leftarrow h(\lambda, K, t)$ — 43

*FIG. 4*

50 — $\theta \leftarrow K / \lambda$

51 — $T_{min} \leftarrow C_m . \theta$
$T_{max} \leftarrow C_M . \theta$

52 — $T < T_{min}$ ?

Oui → 53 — $T_{max} \leftarrow T_{min}$

Non

54 — $T_{min} \leftarrow T_{max} / \tau$

55 — DÉLIVRER $q = 0$

57 — $T < T_{max}$ ?

Oui

Non → 58 — $T_{min} \leftarrow T_{max}$

59 — $T_{max} \leftarrow T_{min} . \tau$

60 — DÉLIVRER $q = 2^n - 1$

61 — $\alpha \leftarrow (T_{max} - T_{min}) / (2^n - 2)$

62 — $q \leftarrow 1 + \left\lfloor (T - T_{min}) / \alpha \right\rfloor$

63 — DÉLIVRER $q$

64 — $t \leftarrow T_{min} + (q - \tfrac{1}{2}) . \alpha$

65 — RETOURNER $t = g(T, K, \lambda)$

*FIG. 5*

*FIG. 6*

*FIG. 7*